# EUROPEAN PATENT APPLICATION

(11) **EP 4 810 922 A1**
(43) Date of publication of application: **23.09.2026**
(21) Application number: 26153093.5
(22) Date of filing: 20.01.2026
(51) Int. Cl.: G01G 21/28, G01G 3/12

(54) **WEIGHING DEVICE**

(30) Priority: 19.03.2025 CN 202520488211 U
(71) Applicant: Shenzhen Chenbei Technology Co., Ltd., Shenzhen, Guangdong 518000 (CN)
(72) Inventor: LIU, Shenghong, SHENZHEN, 518000 (CN); CHEN, Xufeng, SHENZHEN, 518000 (CN)
(74) Representative: Bayramoglu et al.

(57) **Abstract**

The present disclosure discloses a weighing device, relating to the technical field of weighing. The weighing device includes: a top shell; an interactive module disposed on the top shell; a support plate located below the interactive module, where the support plate is provided with a first notch, and the first notch is located below the interactive module; a flat plate disposed on a side of the support plate away from the top shell, where the flat plate is provided with a limiting hole, and the limiting hole is communicated with the first notch; and a first sensor disposed on a side of the flat plate away from the support plate, where at least part of a strain gauge of the first sensor faces the limiting hole, and is deformable in the first notch through the limiting hole. The weighing device has the small and portable structure, and ensures accurate weighing.

## Description

### TECHNICAL FIELD

The present disclosure relates to the technical field of weighing, and in particular to a weighing device.

### BACKGROUND TECHNOLOGY

A weighing device includes an interactive module and sensors. Since the region where the interactive module is located is not designed for placing an object to be weighed, the sensors and the interactive module are typically not disposed in the same region. As a result, the weighing device is not structurally compact, small and portable. Moreover, not all sensors can bear forces uniformly, leading to inaccurate weighing.

Therefore, how to provide a small, portable and accurate weighing device is a problem to be urgently solved by those skilled in the art at present.

### CONTENT OF THE INVENTION

In view of this, an objective of the present disclosure is to provide a weighing device. The weighing device has a small and portable structure, and ensures accurate weighing.

To achieve the above objective, the present disclosure provides the following technical solutions:
A weighing device includes:
a top shell;
an interactive module disposed on the top shell;
a support plate located below the interactive module, where the support plate is provided with a first notch, and the first notch is located below the interactive module;
a flat plate disposed on a side of the support plate away from the top shell, where the flat plate is provided with a limiting hole, and the limiting hole is communicated with the first notch; and
a first sensor disposed on a side of the flat plate away from the support plate, where at least part of a strain gauge of the first sensor faces the limiting hole, and is deformable in the first notch through the limiting hole.

In another aspect, the first sensor further includes a first support portion, and the first support portion is connected to the strain gauge of the first sensor; and
the side of the flat plate away from the support plate is provided with a first buckle; the first buckle is disposed on a periphery of the limiting hole; and the first buckle abuts against the first support portion and is configured to fix the first support portion to the side of the flat plate away from the support plate.

In another aspect, the weighing device further includes a circuit board; and the circuit board is located on the side of the flat plate away from the support plate; and
the side of the flat plate away from the support plate is provided with a second buckle; and the second buckle abuts against the circuit board and is configured to fix the circuit board to the side of the flat plate away from the support plate.

In another aspect, an area of the flat plate is less than an area of the support plate;
the weighing device further includes a second sensor disposed on the side of the support plate away from the top shell; and
the support plate is provided with a second notch, and at least part of a strain gauge of the second sensor faces the second notch, and is deformable in the second notch.

In another aspect, the second sensor further includes a second support portion, and the second support portion is connected to a strain gauge of the second sensor; and
the support plate is provided with an insertion hole; the insertion hole is formed on a periphery of the second notch; and a third buckle on the top shell passes through the insertion hole to abut against the second support portion and is configured to fix the second support portion to the side of the support plate away from the top shell.

In another aspect, the side of the support plate away from the top shell is provided with a plurality of stoppers, and the plurality of stoppers are disposed around a periphery of the second sensor.

In another aspect, one or two corner positions in a width direction of the support plate each are provided with the first notch, while remaining corner positions of the support plate each are provided with the second notch.

In another aspect, the top shell is divided into a display region and a weighing region along a length direction, where the display region is located on a left side of the top shell, and the weighing region is located on a right side of the top shell;
the weighing device further includes a battery; and the battery is disposed on the side of the support plate away from the top shell; and
along a direction of gravity, the support plate is located below the display region and the weighing region, the flat plate is located below the display region, and the battery is located below the weighing region.

In another aspect, the flat plate is made of an insulating material.

In another aspect, the weighing device further includes a bottom shell and support legs; the bottom shell and the top shell are snap-fitted to form an accommodating space; the support legs penetrate through the bottom shell; and the first sensor and the second sensor are located in the accommodating space, and the strain gauge of the first sensor and the strain gauge of the second sensor are respectively disposed on different support legs.

The weighing device provided by the present disclosure has the following beneficial effects:
(1) The interactive module is disposed on the top shell. The support plate is disposed below the interactive module, and the side of the support plate away from the top shell is provided with the flat plate, i.e., the flat plate is disposed below the interactive module. The first sensor below the interactive module may be disposed on the side of the flat plate away from the support plate, preventing mutual interference between the interactive module and the first sensor in mounting. The first sensor is arranged below the interactive module, achieving a compact internal structure of the weighing device as well as a small and portable structure.
(2) The side of the support plate away from the top shell is provided with the flat plate, and the side of the flat plate away from the support plate is provided with the first sensor, i.e., the support plate is disposed between the top shell and the first sensor. When an object is placed onto the top shell for weighing, the support plate can balance a weight of the object and transmit it to the first sensor. This makes the sensor of the weighing device bear a force uniformly to ensure the weighing accuracy.
(3) The support plate is provided with the first notch. The first notch is located below the interactive module. The flat plate is provided with the limiting hole. The limiting hole is communicated with the first notch. The strain gauge of the first sensor faces the limiting hole. After the first sensor deforms under a force, at least part of the strain gauge of the first sensor is deformable in the first notch. This can prevent the support plate from obstructing deformation of the strain gauge to affect a detection result of the sensor, ensuring the weighing accuracy.

### DESCRIPTION OF THE DRAWINGS

To describe the technical solutions in the embodiments of the present disclosure or in the prior art more clearly, the following briefly introduces the accompanying drawings required for describing the embodiments or the prior art. Apparently, the accompanying drawings in the following description are merely embodiments of the present disclosure, and those of ordinary skill in the art may still derive other drawings from these accompanying drawings without creative efforts.
FIG. 1 is a structural exploded view of a weighing device according to the present disclosure;
FIG. 2 is a partial assembly view of a weighing device according to the present disclosure;
FIG. 3 illustrates a positional relationship among a support plate, a first sensor, and a second sensor according to the present disclosure;
FIG. 4 is a front view of a top shell according to the present disclosure;
FIG. 5 is a rear view of a top shell according to the present disclosure; and
FIG. 6 is a schematic structural view of a first sensor or a second sensor according to the present disclosure.

### Reference numerals:

1-top shell, 2-interactive module, 3-elastic support member, 4-connector, 5-support plate, 51-first notch, 52-second notch, 53-insertion hole, 54-stopper, 55-socket, 56-battery groove, 57-charging panel groove, 6-flat plate, 61-limiting hole, 62-first buckle, 63-second buckle, 7-circuit board, 8-charging panel, 9-battery, 10-first sensor, 101-first support portion, 11-second sensor, 111-second support portion, 12-strain gauge, 13-support leg, 14-bottom shell, 141-through hole, 15-third buckle, 151-support rod, 152-clamping member, 16-screw, 17-display region, 18-weighing region, 19-first mounting hole, and 20-second mounting hole.

### SPECIFIC IMPLEMENTATIONS

The technical solutions in embodiments of the present disclosure will be described below clearly and completely with reference to the accompanying drawings in the embodiments of the present disclosure. Apparently, the described embodiments are merely some, rather than all of the embodiments of the present disclosure. All other embodiments derived from the embodiments of the present disclosure by those of ordinary skill in the art without creative efforts shall fall within the protection scope of the present disclosure.

An objective of the present disclosure is to provide a weighing device. The weighing device has a small and portable structure, and ensures accurate weighing.

It should be noted that in the description of the present disclosure, the terms such as "top", "bottom", "left", and "right" indicate the orientation or position relationships based on the drawings. These terms are merely intended to facilitate description of the present disclosure and simplify the description, rather than to indicate or imply that the mentioned device or element must have a specific orientation and must be constructed and operated in a specific orientation. Therefore, these terms should not be construed as a limitation to the present disclosure. Moreover, the terms "first", "second", and "third" are used only for the purpose of description, and are not intended to indicate or imply relative importance.

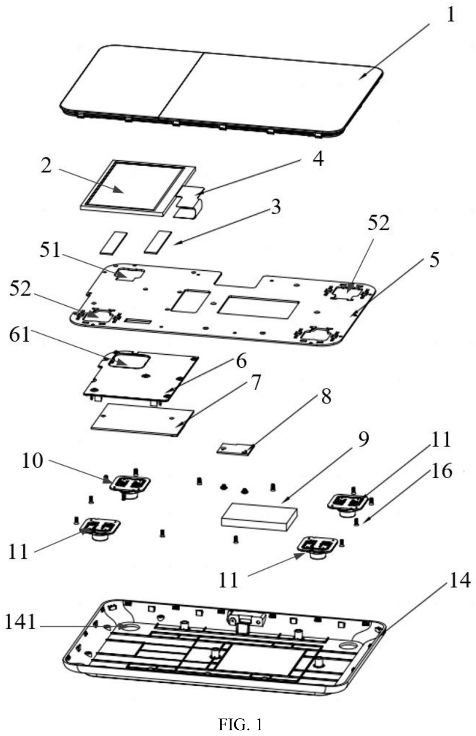

Referring to FIG. 1, the present disclosure provides a weighing device, including top shell 1, interactive module 2, support plate 5, flat plate 6, and first sensor 10.

The interactive module 2 is disposed on the top shell 1.

The support plate 5 is located below the interactive module 2. The support plate 5 is provided with first notch 51. The first notch 51 is located below the interactive module 2.

The flat plate 6 is disposed on a side of the support plate 5 away from the top shell 1. The flat plate 6 is provided with limiting hole 61. The limiting hole 61 is communicated with the first notch 51.

The first sensor 10 is disposed on a side of the flat plate 6 away from the support plate 5. At least part of strain gauge 12 of the first sensor 10 faces the limiting hole 61, and is deformable in the first notch 51 through the limiting hole 61.

It is to be noted that the interactive module 2 may be an independent touch panel touched by a user for inputting to perform a corresponding operation, may also be an independent display screen configured to display such contents as numbers and images, and may further be a touch display screen integrated with a touch function and a display function.

The interactive module 2 is disposed on a back of the top shell 1. A side of the interactive module 2 away from the top shell 1 is provided with elastic support member 3. The elastic support member 3 abuts against the support plate 5. While supporting the interactive module 2, the elastic support member 3 functions to isolate the interactive module 2 and the support plate 5, so as to prevent the support plate 5 from squeezing and damaging the interactive module 2. The elastic support member 3 may be a foam pad or a rubber pad.

The support plate 5 not only functions to fixedly mount the flat plate 6, the first sensor 10, or other electrical components (such as battery 9 and charging panel 8), but also functions to balance the gravity of the object and transmit it to each sensor. Therefore, the support plate 5 is made of a material with high structural strength, such that the support plate 5 has a high load-bearing capacity and is not prone to deformation, thereby better supporting the components and balancing the gravity of the object.

It is further to be noted that when the weighing device is used for weighing, the strain gauge of the sensor experiences elastic deformation for the gravity of the object. The degree of deformation of the strain gauge under a force is proportional to a weight of the object. The deformation of the strain gauge is converted into an electrical signal through a physical mechanism, which is output to the interactive module 2 upon amplification, filtering, and digital processing. Therefore, the support plate 5 is provided with the first notch 51. The flat plate 6 is provided with the limiting hole 61. The limiting hole 61 and the first notch 51 are in communication and are located below the interactive module 2. The first sensor 10 below the interactive module 2 is disposed on the side of the flat plate 6 away from the support plate 5. At least part of the strain gauge 12 of the first sensor 10 faces the limiting hole 61, and is deformable in the first notch 51 through the limiting hole 61. This can prevent the support plate 5 from obstructing the deformation of the strain gauge to affect a detection result of the sensor, ensuring weighing accuracy.

The weighing device provided by the above embodiment has the following beneficial effects:

Firstly, the interactive module 2 is disposed on the top shell 1. The support plate 5 is disposed below the interactive module 2, and the side of the support plate 5 away from the top shell 1 is provided with the flat plate 6, i.e., the flat plate 6 is disposed below the interactive module 2. The first sensor 10 below the interactive module 2 may be disposed on the side of the flat plate 6 away from the support plate 5, preventing mutual interference between the interactive module 2 and the first sensor 10 in mounting. The first sensor 10 is arranged below the interactive module 2, achieving a compact internal structure of the weighing device as well as a small and portable structure.

Secondly, the side of the support plate 5 away from the top shell 1 is provided with the flat plate 6, and the side of the flat plate 6 away from the support plate 5 is provided with the first sensor 10, i.e., the support plate 5 is disposed between the top shell 1 and the first sensor 10. When the object is placed onto the top shell 1 for weighing, the support plate 5 can balance the weight of the object and transmit it to the first sensor 10. This makes the sensor of the weighing device bear a force uniformly to ensure the weighing accuracy.

Thirdly, the support plate 5 is provided with the first notch 51. The first notch 51 is located below the interactive module 2. The flat plate 6 is provided with the limiting hole 61. The limiting hole 61 is communicated with the first notch 51. The strain gauge 12 of the first sensor 10 faces the limiting hole 61. After the first sensor 10 deforms under a force, at least part of the strain gauge of the first sensor 10 is deformable in the first notch 51. This can prevent the support plate 5 from obstructing deformation of the strain gauge 12 to affect a detection result of the sensor, ensuring the weighing accuracy.

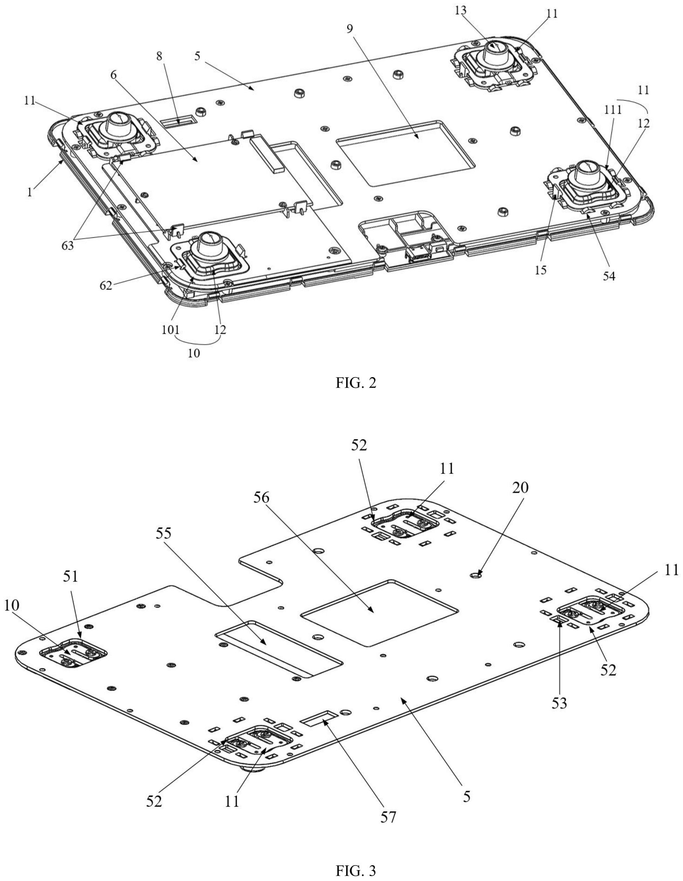

On the basis of the above embodiment, referring to FIG. 2, the first sensor 10 further includes first support portion 101. The first support portion 101 is connected to the strain gauge 12 of the first sensor 10. The side of the flat plate 6 away from the support plate 5 is provided with first buckle 62. The first buckle 62 is disposed on a periphery of the limiting hole 61. The first buckle 62 abuts against the first support portion 101 and is configured to fix the first support portion 101 to the side of the flat plate 6 away from the support plate 5.

Specifically, the first support portion 101 serves as a support structure of the first sensor 10, and is configured to support and connect the strain gauge 12. The side of the flat plate 6 away from the support plate 5 is provided with the first buckle 62. The first buckle 62 is disposed on the periphery of the limiting hole 61. The first buckle 62 abuts against the first support portion 101 of the first sensor 10, and is configured to fix the first support portion 101 to the side of the flat plate 6 away from the support plate 5 and below the limiting hole 61. At least part of the strain gauge 12 connected to the first support portion 101 faces the limiting hole 61.

As can be seen from the above structure, compared with conventional fasteners such as the bolt, fixing the first sensor 10 on the side of the flat plate 6 away from the support plate 5 with the first buckle 62 results in a simple assembly method, and facilitates assembly and disassembly of the first sensor 10. Additionally, the first buckle 62 abuts against the first support portion 101 of the first sensor 10, and presses the first support portion 101 on the flat plate 6, such that the first support portion 101 is firmly attached to the flat plate 6. The gravity of the object, after being balanced by the support plate 5, can be effectively transmitted to the first support portion 101 through the flat plate 6. The first support portion 101 then reversely applies the gravity to the strain gauge 12, such that the degree of deformation of the strain gauge 12 accurately reflects the gravity of the object, thereby ensuring the weighing accuracy.

There are at least two first buckles 62. The at least two first buckles 62 are uniformly arranged on the periphery of the limiting hole 61, so as to improve mounting stability of the first sensor 10.

On the basis of the above embodiment, referring to FIG. 2, the weighing device further includes circuit board 7. The circuit board 7 is located on the side of the flat plate 6 away from the support plate 5. The side of the flat plate 6 away from the support plate 5 is provided with second buckle 63. The second buckle 63 abuts against the circuit board 7 and is configured to fix the circuit board 7 to the side of the flat plate 6 away from the support plate 5.

As can be seen from the above structure, the circuit board 7 is fixed on the side of the flat plate 6 away from the support plate 5 with the second buckle 63, which has the following effects: The mounting space of the side of the flat plate 6 away from the support plate 5 can be fully used, such that the circuit board 7 and the first sensor 10 are arranged compactly, thereby enhancing the compactness of the internal structure of the weighing device. On the other hand, compared with conventional fasteners such as the bolt, fixing the circuit board 7 with the second buckle 63 results in a simple assembly method and facilitates the disassembly and assembly of the circuit board 7.

There are at least two second buckles 63. The at least two second buckles 63 are uniformly arranged around the circuit board 7, so as to improve mounting stability of the circuit board 7.

It is further to be noted that the circuit board 7 is configured to receive and process a weight signal from the sensor. When the object is placed on the top shell 1, the weight is converted by the sensor into an electrical signal. The signal is then received and processed by the circuit board 7. A final signal is transmitted to the interactive module 2 to display an accurate weight of the object. Thus, as shown in FIGS. 1-3, the interactive module 2 is connected to connector 4. The connector 4 is connected to the circuit board 7 through socket 55 in the support plate 5, so as to realize signal interaction between the interactive module 2 and the circuit board 7. Moreover, the first sensor 10 is in signal connection with the circuit board 7, so as to realize signal interaction between the first sensor 10 and the circuit board 7.

On the basis of the above embodiment, referring to FIG. 2, an area of the flat plate 6 is less than an area of the support plate 5. The weighing device further includes second sensor 11 disposed on the side of the support plate 5 away from the top shell 1. The support plate 5 is provided with second notch 52. At least part of strain gauge 12 of the second sensor 11 faces the second notch 52, and is deformable in the second notch 52.

Specifically, since the area of the flat plate 6 is less than the area of the support plate 5, the flat plate 6 does not need to cover the side of the support plate 5 away from the top shell 1, but the flat plate 6 is only located below the interactive module 2 to realize fixed mounting of the first sensor 10 below the interactive module 2. With this arrangement, the flat plate 6 is machined conveniently, and the machining cost of the flat plate 6 is saved. On the other hand, since the circuit board 7 is fixed on the flat plate 6, the circuit board 7 and the first sensor 10 are intensively disposed below the interactive module 2, thereby further enhancing the compactness of the internal structure of the weighing device.

The side of the support plate 5 away from the top shell 1 is further provided with the second sensor 11. The second sensor 11 and the first sensor 10 operate simultaneously, which can effectively share the gravity of the object to improve the weighing accuracy. Additionally, the support plate 5 is provided with the second notch 52, and at least part of the strain gauge 12 of the second sensor 11 faces the second notch 52, and is deformable in the second notch 52, which can prevent the support plate 5 from obstructing the deformation of the strain gauge 12 to affect a detection result of the sensor, ensuring the weighing accuracy.

On the basis of the above embodiment, referring to FIG. 2, FIG. 3, and FIG. 5, the second sensor 11 further includes second support portion 111. The second support portion 111 is connected to strain gauge 12 of the second sensor 11. The support plate 5 is provided with insertion hole 53. The insertion hole 53 is formed on a periphery of the second notch 52. Third buckle 15 on the top shell 1 passes through the insertion hole 53 to abut against the second support portion 111 and is configured to fix the second support portion 111 to the side of the support plate 5 away from the top shell 1.

Specifically, the second support portion 111 serves as a support structure of the second sensor 11, and is configured to support and connect the strain gauge 12. The support plate 5 is provided with the insertion hole 53. The insertion hole 53 is formed on a periphery of the second notch 52. The top shell 1 is provided with the third buckle 15 corresponding to the insertion hole 53. The third buckle 15 passes through the insertion hole 53 to abut against the second support portion 111 and is configured to fix the second support portion 111 to the side of the support plate 5 away from the top shell 1.

As can be seen from the above structure, compared with conventional fasteners such as the bolt, fixing the second sensor 11 on the side of the support plate 5 away from the top shell 1 with the third buckle 15 results in a simple assembly method, and facilitates assembly and disassembly of the second sensor 11. Additionally, the third buckle 15 abuts against the second support portion 111 of the second sensor 11, and presses the second support portion 111 on the support plate 5, such that the second support portion 111 is firmly attached to the support plate 5. The gravity of the object, after being balanced by the support plate 5, can be effectively transmitted to the second support portion 111 through the support plate 5. The second support portion 111 then reversely applies the gravity to the strain gauge 12, such that the degree of deformation of the strain gauge 12 accurately reflects the gravity of the object, thereby ensuring the weighing accuracy.

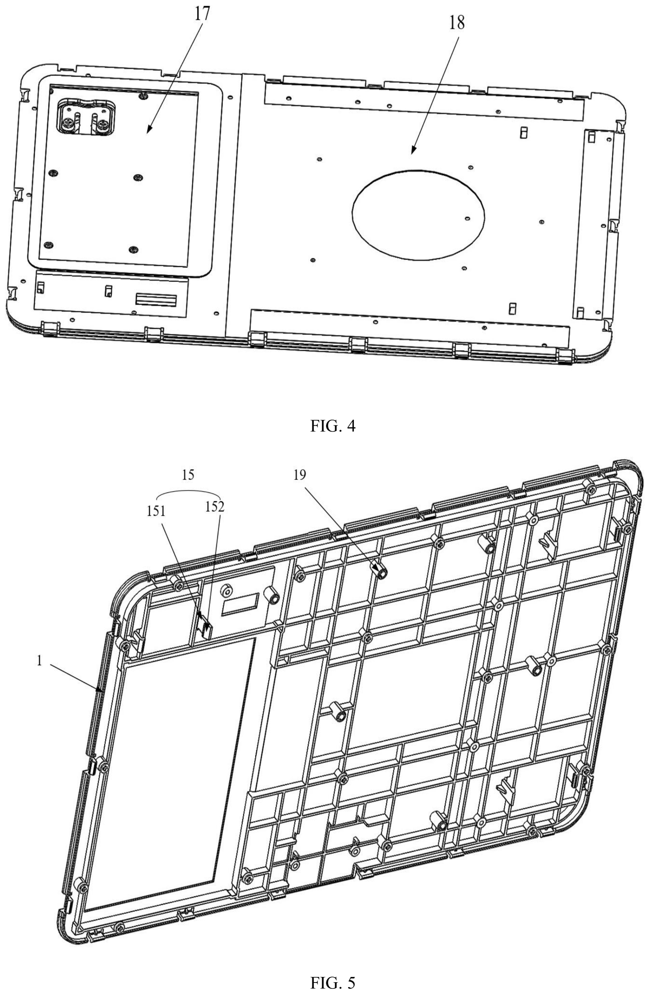

Referring to FIG. 5, the third buckle 15 includes support rod 151 and clamping member 152. The support rod 151 is vertically disposed on the top shell 1. An end of the support rod 151 away from the top shell 1 is connected to the clamping member 152. The clamping member 152 passes through the insertion hole 53 of the support plate 5 to abut against the second support portion 111 in the second sensor 11. With the above structural arrangement of the third buckle 15, while the second sensor 11 is fixed, the vertical support rod 151 in the third buckle 15 serves a guiding function during assembly of the support plate 5, facilitating in-place assembly of the support plate 5.

On the basis of the above embodiment, referring to FIG. 2, the side of the support plate 5 away from the top shell 1 is provided with a plurality of stoppers 54. The plurality of stoppers 54 are disposed around a periphery of the second sensor 11. Hence, the plurality of stoppers 54 can effectively limit displacement of the second sensor 11.

On the basis of the above embodiment, referring to FIG. 1 and FIG. 3, one or two corner positions in a width direction of the support plate 5 each are provided with the first notch 51, while remaining corner positions of the support plate 5 each are provided with the second notch 52.

Specifically, one or two corner positions in the width direction of the support plate 5 each are provided with the first notch 51. Since the flat plate 6 is provided with the limiting hole 61 communicated with the first notch 51, the flat plate 6 is disposed corresponding to the one or two corner positions in the width direction of the support plate 5. Furthermore, since the first sensor 10 is disposed on the flat plate 6, and at least part of the strain gauge 12 of the first sensor 10 faces the limiting hole 61, it can be seen that the one or two corner positions in the width direction of the support plate 5 each are provided with the first sensor 10. Additionally, the remaining corner positions of the support plate 5 each are provided with the second notch 52. Since the second sensor 11 is disposed on the support plate 5, and at least part of the strain gauge 12 of the second sensor 11 faces the second notch 52, it can be seen that the remaining corner positions of the support plate 5 each are provided with the second sensor 11. Thus, four corner positions of the support plate 5 each are provided with the sensor. During weighing, regardless of the position where the object is placed on the top shell 1, the gravity of the object can be uniformly dispersed to four sensors, thereby improving the weighing accuracy.

In addition, the flat plate 6 is disposed corresponding to the one or two corner positions in the width direction of the support plate 5. Since the interactive module 2 is located above the flat plate 6, and the circuit board 7 is located on the flat plate 6, the interactive module 2 and the circuit board 7 can be intensively disposed in a side along a width direction of the weighing device. This makes full use of the space in the width direction, such that the internal structure of the weighing device is more compact.

On the basis of the above embodiment, referring to FIG. 1 and FIG. 4, the top shell 1 is divided into display region 17 and weighing region 18 along a length direction. The display region 17 is located on a left side of the top shell 1. The weighing region 18 is located on a right side of the top shell 1. The weighing device further includes battery 9. The battery 9 is disposed on the side of the support plate 5 away from the top shell 1. Along a direction of gravity, the support plate 5 is located below the display region 17 and the weighing region 18, the flat plate 6 is located below the display region 17, and the battery 9 is located below the weighing region 18.

Specifically, the top shell 1 is divided into the display region 17 and the weighing region 18 along the length direction. The display region 17 is mainly configured to display weighing data, while the weighing region 18 is mainly configured to place the object for weighing. The support plate 5 is located below the display region 17 and the weighing region 18. The flat plate 6 is located below the display region 17. Since the interactive module 2 is located between the top shell 1 and the support plate 5, and the circuit board 7 is disposed on the side of the flat plate 6 away from the top shell 1, the interactive module 2 and the circuit board 7 are sequentially located below the display region 17 along the direction of gravity. The battery 9 is located below the weighing region 18, which can reduce a thickness of the display region 17, thereby reducing an overall thickness of the weighing device.

Additionally, the interactive module 2 below the display region 17 may be externally connected to other devices (such as a mobile phone) for information interaction. Thus, the display region 17 is located on the left side of the top shell 1, and the weighing region 18 is located on the right side of the top shell 1, which is convenient for the user to operate the mobile phone with the right hand and the interactive module 2 of the weighing device with the left hand.

Regarding a specific mounting method of the battery 9, referring to FIGS. 1-3, the support plate 5 located below the weighing region 18 is provided with battery groove 56. The battery groove 56 is snap-fitted with the battery 9, such that the battery 9 is conveniently disposed on the support plate 5.

On the basis of the above embodiment, the flat plate 6 is made of an insulating material such as a plastic plate or a resin plate. The flat plate 6 is the insulating plate, which prevents a short-circuit risk caused by contact between the flat plate 6 and the circuit board 7.

On the basis of the above embodiment, referring to FIG. 1, the weighing device further includes bottom shell 14 and support legs 13. The bottom shell 14 and the top shell 1 are snap-fitted to form an accommodating space. The support legs 13 penetrate through the bottom shell 14. The first sensor 10 and the second sensor 11 are located in the accommodating space, and the strain gauge 12 of the first sensor 10 and the strain gauge 12 of the second sensor 11 are respectively disposed on different support legs 13.

Specifically, a periphery of the top shell 1 is provided with a plurality of first clamping portions. A periphery of the bottom shell 14 is provided with a plurality of second clamping portions. The plurality of first clamping portions are clamped with the plurality of second clamping portions in one-to-one correspondence, such that the bottom shell 14 and the top shell 1 are snap-fitted together. This assembly method is convenient to assemble and disassemble. The accommodating space is formed between the bottom shell 14 and the top shell 1. The interactive module 2, the support plate 5, the flat plate 6, the circuit board 7, the battery 9, the first sensor 10, and the second sensor 11 are disposed in the accommodating space.

The bottom shell 14 is provided with through holes 141 corresponding to the first sensor 10 and the second sensor 11. The support legs 13 penetrate through the bottom shell 14 via the through holes 141 and extend out of the accommodating space, so as to support the weighing device. Moreover, the strain gauge 12 of the first sensor 10 and the strain gauge 12 of the second sensor 11 are respectively disposed on different support legs 13, such that the strain gauge 12 makes full use of an internal space of the support leg 13 to reduce the thickness of the weighing device.

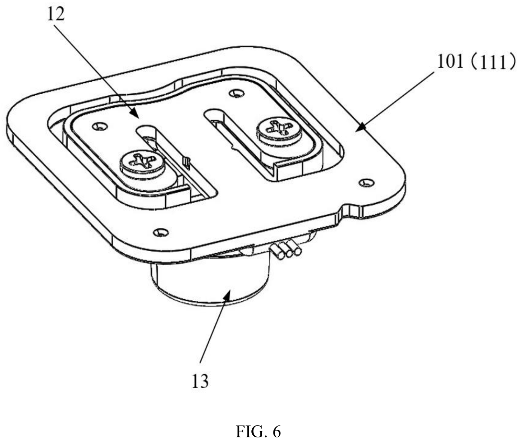

It is further to be noted that as shown in FIG. 6, the first support portion 101 of the first sensor 10 is connected to the support leg 13, and the second support portion 111 of the second sensor 11 is connected to the support leg 13. Thus, during weighing, each sensor stably contacts the ground or a support table via the support leg 13. The gravity of the object is uniformly transmitted to the support portion of the sensor through the support plate 5, i.e., the support plate 5 presses the support portion of the sensor. Since the support portion and the support leg 13 are connected together, the support leg 13 presses the ground or the support table, and the support leg 13 suffers an upward counterforce. Moreover, the support leg 13 is connected to the strain gauge 12 in the sensor, so the strain gauge 12 moves upward to deform and the weighing device can measure deformation of the strain gauge to obtain the weight of the object.

To assemble the support plate 5, a side of the top shell 1 facing the bottom shell is provided with a plurality of first mounting holes 19. A plurality of second mounting holes 20 are formed in the support plate 5. The plurality of second mounting holes 20 are in one-to-one correspondence with the plurality of first mounting holes 19. Screws 16 are fastened to the first mounting holes 19 of the top shell 1 through the second mounting holes 20 of the support plate 5, such that the support plate 5 is fixed on the top shell 1.

Besides, the weighing device further includes charging panel 8. The support plate 5 located below the weighing region 18 is provided with charging panel groove 57. An opening of the charging panel groove 57 faces the bottom shell 14. The bottom shell 14 is provided with a charging port. The charging port is communicated with the charging panel groove 57. The charging panel 8 is fixed in the charging panel groove 57. A power supply may be externally connected via the charging port to charge the weighing device.

It is to be noted that relational terms herein such as first and second are merely used to distinguish one entity from another entity without necessarily requiring or implying any actual such relationship or order between such entities.

Each embodiment in the description is described in a progressive mode, each embodiment focuses on differences from other embodiments, and references can be made to each other for the same and similar parts between embodiments.

The above describes the weighing device provided by the present disclosure in detail. Specific examples are used for illustrating principles and implementations of the present disclosure herein. The description of the embodiments above is only used for helping understand the method and its core concept of the present disclosure. It should be noted that, several improvements and modifications may be made by those of ordinary skill in the art without departing from the principle of the present disclosure, and these improvements and modifications should also fall within the protection scope of the present disclosure.

## Claims

1. A weighing device, **characterized by** comprising:
a top shell (1);
an interactive module (2) disposed on the top shell (1);
a support plate (5) located below the interactive module (2), wherein the support plate (5) is provided with a first notch (51), and the first notch (51) is located below the interactive module (2);
a flat plate (6) disposed on a side of the support plate (5) away from the top shell (1), wherein the flat plate (6) is provided with a limiting hole (61), and the limiting hole (61) is communicated with the first notch (51); and
a first sensor (10) disposed on a side of the flat plate (6) away from the support plate (5), wherein at least part of a strain gauge (12) of the first sensor (10) faces the limiting hole (61), and is deformable in the first notch (51) through the limiting hole (61).

2. The weighing device according to claim 1, **characterized in that** the first sensor (10) further comprises a first support portion (101), and the first support portion (101) is connected to the strain gauge (12) of the first sensor (10); and
the side of the flat plate (6) away from the support plate (5) is provided with a first buckle (62); the first buckle (62) is disposed on a periphery of the limiting hole (61); and the first buckle (62) abuts against the first support portion (101) and is configured to fix the first support portion (101) to the side of the flat plate (6) away from the support plate (5).

3. The weighing device according to claim 1, **characterized in that** the weighing device further comprises a circuit board (7), wherein the circuit board (7) is located on the side of the flat plate (6) away from the support plate (5); and
the side of the flat plate (6) away from the support plate (5) is provided with a second buckle (63); and the second buckle (63) abuts against the circuit board (7) and is configured to fix the circuit board (7) to the side of the flat plate (6) away from the support plate (5).

4. The weighing device according to claim 1, **characterized in that** an area of the flat plate (6) is less than an area of the support plate (5);
the weighing device further comprises a second sensor (11) disposed on the side of the support plate (5) away from the top shell (1); and
the support plate (5) is provided with a second notch (52), and at least part of a strain gauge (12) of the second sensor (11) faces the second notch (52), and is deformable in the second notch (52).

5. The weighing device according to claim 4, **characterized in that** the second sensor (11) further comprises a second support portion (111), and the second support portion (111) is connected to the strain gauge (12) of the second sensor (11); and
the support plate (5) is provided with an insertion hole (53); the insertion hole (53) is formed on a periphery of the second notch (52); and a third buckle (15) on the top shell (1) passes through the insertion hole (53) to abut against the second support portion (111) and is configured to fix the second support portion (111) to the side of the support plate (5) away from the top shell (1).

6. The weighing device according to claim 4, **characterized in that** the side of the support plate (5) away from the top shell (1) is provided with a plurality of stoppers (54), and the plurality of stoppers (54) are disposed around a periphery of the second sensor (11).

7. The weighing device according to claim 4, **characterized in that** one or two corner positions in a width direction of the support plate (5) each are provided with the first notch (51), while remaining corner positions of the support plate (5) each are provided with the second notch (52).

8. The weighing device according to claim 4, **characterized in that** the top shell (1) is divided into a display region (17) and a weighing region (18) along a length direction, wherein the display region (17) is located on a left side of the top shell (1), and the weighing region (18) is located on a right side of the top shell (1);
the weighing device further comprises a battery (9); and the battery (9) is disposed on the side of the support plate (5) away from the top shell (1); and
along a direction of gravity, the support plate (5) is located below the display region (17) and the weighing region 18, the flat plate (6) is located below the display region (17), and the battery (9) is located below the weighing region (18).

9. The weighing device according to claim 1, **characterized in that** the flat plate (6) is made of an insulating material.

10. The weighing device according to any one of claims 4 to 9, **characterized in that** the weighing device further comprises a bottom shell (14) and support legs (13), wherein the bottom shell (14) and the top shell (1) are snap-fitted to form an accommodating space; the support legs (13) penetrate through the bottom shell (14); and the first sensor (10) and the second sensor (11) are located in the accommodating space, and the strain gauge (12) of the first sensor (10) and the strain gauge (12) of the second sensor (11) are respectively disposed on different support legs (13).
